# EUROPÄISCHE PATENTSCHRIFT

(11) **EP 2 842 609 B1**
(45) Veröffentlichungstag und Bekanntmachung des Hinweises auf die Patenterteilung: **21.10.2020**
(21) Anmeldenummer: 14182519.0
(22) Anmeldetag: 27.08.2014
(51) Int. Cl.: A62C 4/00, B23P 11/00, A62C 3/16

(54) **Druckentlastungsvorrichtung für druckfest gekapselte Gehäuse mit einem porösen Körper mit Übermaßpassung**
Pressure release device for housings with flameproof encapsulation comprising a porous body comprising interference fit
Dispositif de mise hors pression pour un boîtier encapsulé résistant à la pression doté d'un corps poreux monté en force

(30) Priorität: 27.08.2013 DE 102013109261
(43) Veröffentlichungstag der Anmeldung: 04.03.2015
(73) Patentinhaber: R. Stahl Schaltgeräte GmbH, 74638 Waldenburg (DE)
(72) Erfinder: Mann, Ulrich, 74523 Schwäbisch Hall (DE); Limbacher, Bernd, 74523 Schwäbisch Hall (DE); Würz, Helmut, 74676 Niedernhall (DE)
(74) Vertreter: Rüger Abel Patentanwälte PartGmbB

(56) Entgegenhaltungen:
- DE-A1-102010 016 782
- DE-U1-202008 001 972
- US-A- 3 711 259
- US-A- 4 328 901

## Beschreibung

Die Erfindung betrifft eine Druckentlastungsvorrichtung für ein Schutzgehäuse zur druckfesten Kapselung von Betriebsmitteln, die Zündquellen bilden können.

Die druckfeste Kapselung stellt eine Zündschutzart im Explosionsschutz (Ex-d) dar. Diese beruht darauf, elektrische Betriebsmittel, die Quellen eines Zündfunkens sein können, derart einzufassen, dass im Gehäuseinneren auftretende Explosionen nicht dazu führen, dass Flammen, heiße Partikel oder Gase nach außen gelangen können, die zu einem Entzünden der Atmosphäre außerhalb des Schutzgehäuses führen könnten. Zudem werden bei der druckfesten Kapselung Stellen auf dem Schutzgehäuse mit Temperaturen oberhalb der Zündtemperatur entzündlicher Gase oder Stäube vermieden. Durch eine Explosion in dem Schutzgehäuse entstehender Überdruck in Bezug auf die Umgebung des Gehäuses muss durch Ausgleich mit der Umgebung sicher abgebaut werden. Zur Kühlung der heißen Gase und zur Löschung potentieller Zündfunken wird daher ein gasdurchlässiger zünddurchschlagsicherer Durchgang zwischen dem Inneren des Schutzgehäuses und der Umgebung des Schutzgehäuses vorgesehen.

Die DE 10 2010 016 782 A1 beschreibt eine Druckentlastungsvorrichtung mit einem porösen Körper, der in einem Aufnahmekörper angeordnet ist. Der poröse Körper weist in seinem Randbereich einen Porenverschluss auf. Der randseitige Porenverschluss soll die Umströmung des porösen Körpers durch eine Flamme oder heiße Gase verhindern. Zur Ausbildung des Porenverschlusses schlägt die Druckschrift beispielsweise vor, den porösen Körper an seinem Rand gegen eine konische Sitzfläche des Aufnahmekörpers vorzuspannen. Hierzu zeigt die Druckschrift ein Ausführungsbeispiel mit einem reifenartigen Körper aus weichem Metall, der um den porösen Körper angeordnet ist und diesen randseitig einfasst. Der Aufnahmekörper weist ein Innengewinde auf, in das eine Spannmutter eingesetzt ist, mit Hilfe derer, die für die Ausbildung der Vorspannung erforderliche Kraft auf den Randbereich des porösen Körpers ausgeübt wird. Ein anderes Beispiel zeigt ein Aufnahmekörper mit einem Innengewinde und einer Spannmutter, die das poröse Material des porösen Körpers randseitig einquetscht, so dass es zu einem Kollabieren der Poren des porösen Körpers kommt. Die genannten Ausführungsformen haben den Nachteil, dass durch das Einbringen eines Gewindes und einer Spannmutter und durch das randseitige Verschließen der Poren des porösen Körpers der effektive Querschnitt für die Druckentlastungsvorrichtung reduziert ist. Im Sinne einer effektiven Druckentlastung ist jedoch ein möglichst großer Querschnitt gewünscht. Die genannte Druckentlastungsvorrichtung erfordert zum Teil eine aufwendige Herstellung des porösen Körpers und des Aufnahmekörpers, um die Zünddurchschlagsicherheit herzustellen, indem das Umströmen des porösen Körpers durch Porenverschluss verhindert wird.

US 4 328 901 zeigt eine Druckausgleichsvorrichtung mit einem mehrschichtigen durchlässigen Material, das in einem Randbereich mit einem Flansch axial gegen ein Gehäuse komprimiert wird.

Davon ausgehend ist es Aufgabe der Erfindung eine Druckentlastungsvorrichtung für ein Schutzgehäuse zu schaffen, die einen vergrößerten Gasströmungsquerschnitt ermöglicht und eine vereinfachte Herstellung aufweist.

Diese Aufgabe wird mit einer Druckentlastungsvorrichtung nach Anspruch 1 und mit einem Verfahren zur Herstellung einer Druckentlastungsvorrichtung nach Patentanspruch 15 gelöst.

Die erfindungsgemäße Druckentlastungsvorrichtung für ein Schutzgehäuse zur explosionsgeschützten Kapselung von Betriebsmitteln nach der Zündschutzart druckfeste Kapselung (Ex-d) weist einen Aufnahmekörper auf, der einen Durchgang und eine Gegenfläche aufweist. Die Gegenfläche ist in einer Umfangsrichtung ringförmig geschlossen. In dem Durchgang des Aufnahmekörpers ist ein poröser Körper angeordnet. Der poröse Körper ist frei von Zündspalten und daher zünddurchschlagsicher ausgeführt. Der poröse Körper weist eine äußere Umfangsfläche und eine innere und eine äußere Durchtrittsfläche auf. Der poröse Körper ist in einer Richtung quer zur Gegenfläche bzw. quer zur Umfangsrichtung teilweise elastisch verformt. Er kann zusätzlich auch teilweise auch plastisch verformt sein. Der poröse Körper liegt dadurch mit seiner äußeren Umfangsfläche an der Gegenfläche entlang der gesamten äußeren Umfangsfläche an. Die elastische Verformung und kraftschlüssige Anlage wird durch eine Übermaßpassung des porösen Körpers in Bezug auf die Querabmessung des Durchgangs des Aufnahmekörpers erreicht. Die Anlage ist spaltfrei in dem Sinne, dass verbleibende Spalte zwischen der Gegenfläche des Aufnahmekörpers und der äußere Umfangsfläche des porösen Körpers zünddurchschlagsicher sind. Solche eventuell verbleibenden Spalte sind auf ein Maß reduziert, bei dem Flammen bzw. Zündfunken nicht durchschlagen können und heiße Explosionsgase oder sonstige Gase das Schutzgehäuse ausreichend gekühlt verlassen. Vorzugsweise ist die Übermaßpassung so ausgebildet, dass auch in einem Randbereich des porösen Körpers im Anschluss an die an der Gegenfläche anliegenden Umfangsfläche des Aufnahmekörpers die Poren des Körpers nicht vollständig kollabiert sind, so dass auch durch den Randbereich des porösen Körpers ein Gasaustausch stattfinden kann.

Durch die teilweise elastische Presspassung bzw. Übermaßpassung können lokale Wärmeausdehnungen des Aufnahmekörpers und/oder des porösen Körpers sicher ausgeglichen werden. Beim Gasaustausch strömt Gas von dem Inneren des Schutzgehäuses durch die innere Durchtrittsfläche in den porösen Körper und durch die äußere Durchtrittsfläche in die Umgebung. Auch ein Gasfluss in die umgekehrte Richtung ist möglich. Durch die Erfindung kann ein Querschnitt zum Gasaustausch erreicht werden, der sich über den gesamten Durchgangsquerschnitt des Aufnahmekörpers erstreckt oder den Durchgangsquerschnitt optimal ausnutzt.

Die Kontur des porösen Körpers in Draufsicht auf eine Durchtrittsfläche ist an die Querschnittskontur des Durchgangs an der Anbringungsstelle für den porösen Körper angepasst. Beispielsweise können sowohl der poröse Körper als auch die Querschnittskontur des Durchgangs kreisrund sein. Andere Konturen, wie Polygone oder Konturen mit einer belieben Anzahl von geraden und/oder gekrümmt verlaufenden Abschnitten sind auch möglich. Gegenüber dem Stand der Technik ist der Konstruktions-, Material- und Fertigungsaufwand reduziert. Eine aufwendige separate Spanneinrichtung mit Gewinden und Spannmuttern kann entfallen. Die erfindungsgemäße Druckentlastungsvorrichtung kann dadurch auch kompakter ausgeführt werden. Insbesondere kann die Druckentlastungsvorrichtung mit dem Aufnahmekörper und dem porösen Körper flacher ausgebildet werden, d.h. dass sich der Aufnahmekörper in Durchgangsrichtung gar nicht oder nur wenig über die Dicke des porösen Körpers bzw. dessen Abmessung in Durchgangsrichtung erstreckt. Der poröse Körper kann in Durchgangsrichtung auch eine Erstreckung aufweisen, die so groß ist wie oder größer als die Erstreckung des Aufnahmekörpers bzw. der Gegenfläche in Durchgangsrichtung.

Die Herstellung des porösen Körpers ist gegenüber dem Stand der Technik vereinfacht. Ein Porenverschluss beispielsweise durch eine Ringeinfassung des porösen Körpers vor dem Einsetzen in den Aufnahmekörper, ist wegen der Übermaßpassung nicht notwendig. Es hat sich herausgestellt, dass allein durch die Übermaßpassung auch ohne zusätzliche Mittel oder Maßnahmen eine zünddurchschlagsichere Anordnung des porösen Körpers im Durchgang möglich ist. Zusätzliche Ausgleichselemente zur Anpassung an thermische Ausdehnung sind nicht erforderlich.

Das erfindungsgemäße Verfahren zur Herstellung einer Druckentlastungsvorrichtung für ein Schutzgehäuse zur druckfesten Kapselung von Betriebsmitteln weist folgende Schritte auf:
Ein Aufnahmekörpers mit einem Durchgang und einer in Umfangsrichtung ringförmig geschlossen verlaufenden Gegenfläche wird bereitgestellt. Es wird außerdem ein poröser Körper bereitgestellt, der eine äußere Umfangsfläche aufweist. Der poröse Körper hat an jeder Stelle der Umfangsfläche ein Übermaß in Richtung quer zu der äußeren Umfangsfläche in Bezug auf den Querschnitt des Durchgangs des Aufnahmekörpers an der Gegenfläche.

In einem weiteren Schritt wird der poröse Körper zur Reduzierung der Abmessung des porösen Körpers quer zur äußeren Umfangsfläche mit Hilfe eines geeigneten Hilfsmittels oder Werkzeugs teilweise elastisch verformt. Der poröse Körper wird in dem Durchgang an einer Anbringungsstelle so angeordnet, dass die äußere Umfangsfläche zündspaltfrei entlang der Gegenfläche flächig an der Gegenfläche anliegt. Dabei drückt sich die Umfangsfläche aufgrund des Übermaßes des porösen Körpers und der dadurch bewirkten teilweise elastischen Verformung in Umfangsrichtung im Wesentlichen gleichmäßig an die den Durchgang begrenzende Gegenfläche an. Unter zündspaltfrei wird hier verstanden, dass zwischen der äußeren Umfangsfläche des porösen Körpers und der Gegenfläche des Aufnahmekörpers durchaus Spalte verbleiben können, die jedoch zu einer ausreichenden Kühlung von Verbrennungs- bzw. Explosionsgasen und zu einer wirksamen Verhinderung eines Zünddurchschlags führen. Die Querschnittsfläche eines gegebenenfalls vorhandenen Spalts zwischen dem Aufnahmekörper und dem porösen Körper ist kleiner oder höchstens so groß wie die Porengröße der zünddurchschlagssicheren Durchtrittsfläche im porösen Körper.

Vorzugsweise bedeutet das Bereitstellen eines porösen Körpers das Heraustrennen des porösen Körpers aus porösem Material mit der entsprechenden Dicke. Die Trennfläche bildet dabei die Umfangsfläche des porösen Körpers. An der Umfangsfläche kann durch einen Energieeintrag beim Heraustrennen des porösen Körpers eine Veränderung, insbesondere Verringerung, der Porosität und/oder der Porengröße verglichen mit dem übrigen Material des porösen Körpers erfolgen. Alternativ kann der poröse Körper auch in eine Form gesintert werden. Bevorzugt finden anschließend keine weitere Verfahrensschritte zur Herstellung des porösen Körpers statt, beispielsweise das Anbringen einer Einfassung.

Der Aufnahmekörper kann ein von der sonstigen Wand bzw. sonstigen Wandteilen des Schutzgehäuses gesondertes Bauteil bzw. Einsatzteil sein. Alternativ ist die Außenwand bzw. ein Wandabschnitt einer Außenwand des Schutzgehäuses selbst der Aufnahmekörper. Der Durchgang des Aufnahmekörpers ist dazu eingerichtet, das Innere des Schutzgehäuses, in dem die Betriebsmittel angeordnet sind, mit der Umgebung des Schutzgehäuses für einen Druckausgleich zu verbinden. Der Durchgang weist eine Gegenfläche auf, die die Anlagefläche für den porösen Körper bildet. Gegen die Gegenfläche stützt sich der teilweise elastisch verformte poröse Körper ab. Die Gegenfläche ist in einer Umfangsrichtung ringförmig geschlossen. Unter einer ringförmig geschlossenen Fläche wird nicht nur die kreisförmig, sondern auch die elliptisch, rechteckig, polygonal oder auf sonstige Weise gekrümmte geschlossene Fläche verstanden. Die Gegenfläche bzw. die innere Umfangsfläche des Aufnahmekörpers, die die Gegenfläche beinhaltet, kann sich an wenigstens einer Stelle in oder entgegen der Durchgangsrichtung neigen, also beispielsweise konisch sein. Vorzugsweise jedoch läuft die Gegenfläche axial parallel zu der Durchgangsrichtung, bildet also beispielsweise eine Zylindermantelinnenfläche.

Der Durchgang kann sich bei einem Ausführungsbeispiel im Anschluss an die Gegenfläche in einem Axialabschnitt erweitern, so dass der Durchmesser oder Querschnitt des Durchgangs im Bereich dieses Axialabschnitts von der Gegenfläche weg zunimmt. Dadurch kann der sich erweiternde Axialabschnitt ein Hilfsmittel zum Einführen des porösen Körpers in den Durchgang zu der Anbringungsstelle an der Gegenfläche darstellen.

Die Gegenfläche kann glatt sein. Darunter wird ein z.B. durch mechanische Bearbeitung erlangter Zustand verstanden, bei dem die Rautiefe der Fläche höchstens so groß ist, wie der maximale Porenquerschnitt des porösen Körpers.

Die Gegenfläche kann jedoch auch, beispielsweise durch Laserbearbeitung oder sonstige Strahlen, eine zufällige oder regelmäßige Oberflächenstruktur aufweisen. Eine solche Oberflächenstruktur kann zu einem Ineinandergreifen der Vorsprünge der Oberflächenstruktur mit dem porösen Werkstoff des porösen Körpers führen, so dass sozusagen ein "Verkrallen" des Materials an der Umfangsfläche des porösen Körpers mit der Gegenfläche erreicht ist. Der Halt des porösen Körpers in dem Durchgang kann dadurch verbessert werden. Durch das Ineinandergreifen des porösen Körpers mit der Oberflächenstruktur an der Gegenfläche kann außerdem ein für die Zünddurchschlagsicherheit ausreichend langer Weg erreicht werden, den etwa ein Zündfunken durch den Grenzbereich zwischen dem porösen Körper und der Gegenfläche nehmen müsste.

Der poröse Körper weist Poren auf, die zwar einen Gasaustausch zwischen dem Inneren des Schutzgehäuses und der Umgebung des Schutzgehäuses ermöglichen, die jedoch durch ihre Porengröße, d.h. ihren (mittleren) Querschnitt ihre Anordnung und ihre Länge zu einer effektiven Verlängerung des Weges von der inneren Durchtrittsfläche zur äußeren Durchtrittsfläche führen. D.h. das Gas wird auf dem Weg effektiv gekühlt. Ein möglicher Zündfunke erlischt auf dem Weg durch den Porenkörper. Unter Poren werden beispielsweise nicht nur ungeordnete unregelmäßig geformte Öffnungen und Gänge, sondern auch sich axial entlang der Durchgangsrichtung durch den porösen Körper erstreckende röhrenförmige Durchgänge verstanden, die einen geringen Querschnitt aufweisen.

In einer bevorzugten Ausführungsform ist der poröse Körper ein Wirrfaserverbundteil. In einem solchen sind Fasern unregelmäßig angeordnet und zumindest teilweise miteinander verschlungen. Die durch den Wirrfaserverbund erzeugten Poren sind durch die unregelmäßige Anordnung der Fasern ebenfalls unregelmäßig angeordnet und können unterschiedliche Querschnitte und Längen aufweisen. Insgesamt bleibt die Porengröße der Poren jedoch unter einem bestimmten Wert, so dass die druckfeste Kapselung sichergestellt ist. Vorzugsweise haben die Fasern einen Durchmesser von mindestens 70 Mikrometern und maximal 130 Mikrometern. Bevorzugt beträgt die Porengröße in zumindest einer oder zumindest zwei Raumrichtungen mindestens 80 Mikrometer und maximal 250 Mikrometer. Vorzugsweise beträgt die Porosität des freien, d.h. nicht in den Durchgang eingesetzten porösen Körpers mindestens 60% und maximal 80%. Unter der Porosität wird, unabhängig von der Ausführungsform des porösen Körpers, das Verhältnis des Porenvolumens zum Gesamtvolumen des porösen Körpers verstanden.

In einer weiteren bevorzugten Ausführungsform ist der poröse Körper durch Sintern hergestellt und besteht vorzugsweise aus pulvergesintertem Material. Die Porosität des nicht eingesetzten und nicht beaufschlagten porösen Körpers beträgt vorzugsweise mindestens 45% und vorzugsweise maximal 60%. Vorzugsweise beträgt die Porengröße in zumindest einer oder zumindest zwei Raumrichtungen mindestens 50 Mikrometer und maximal 100 Mikrometer.

Bei den bevorzugten Ausführungsformen hat der poröse Körper 24 an jeder Stelle eine von Null verschiedene Porosität P. Insbesondere ist die Porosität P ohne Einwirkung äußerer Verformungskräfte auf den Körper überall im Wesentlichen gleich groß.

Der gesinterte poröse Körper kann durch Sintern von Partikeln wie Pulver oder Fasern hergestellt sein..

Unabhängig von der Ausführungsform des porösen Körpers beträgt die Mindestdicke, d.h. die Erstreckung des Körpers von der inneren Durchtrittsfläche bis zur äußeren Durchtrittsfläche in Durchgangsrichtung mindestens 5 mm bis 10 mm.

Der poröse Körper besteht vorzugsweise aus temperaturfestem Werkstoff. Beispielsweise bestehen die Fasern des Wirrfaserverbunds aus temperaturfestem Werkstoff. Der Werkstoff ist vorzugsweise bis zu einer Temperatur von mindestens 400° temperaturfest. Insbesondere wird die Struktur der porösen Körpers auch bei hohen Temperaturen von bis zu 400°C oder auch darüber nicht oder nur geringfügig verändert, so dass jedenfalls kein Zündspalt im Durchgang gebildet wird. Die Temperaturfestigkeit des verwendeten Werkstoffs kann beispielsweise sicher stellen, dass es beim Durchtritt heißer Gase durch den porösen Körper nicht zu einem Verkleben der Poren und/oder einem Verlust der teilweisen Elastizität und/oder der Steifigkeit des porösen Körpers kommt.

Bei dem Werkstoff des porösen Körpers kann es sich beispielsweise um Metall, z.B. um Stahl, handeln. Vorzugsweise ist der Körper, beispielsweise die Metallpartikel oder die Fasern, aus einem legierten Stahl, insbesondere aus einem chromlegierten Stahl, beispielsweise Edelstahl, hergestellt. Der poröse Körper, beispielsweise seine Fasern, kann auch aus einem anderen Material, beispielsweise Kunststoff oder Keramik hergestellt sein. Der Wirrfaserverbundkörper kann beispielsweise auch gemischte Fasern, d.h. Fasern aus zwei unterschiedlichen Materialien, beispielsweise unterschiedlichen Metallen, aufweisen.

Die lokale Porosität des in den Durchgang des Aufnahmekörpers eingesetzten porösen Körpers kann radial bzw. in Richtung zu der Gegenfläche nach außen abnehmen. Beispielsweise kann in einem Randbereich des porösen Körpers eine Zone verringerter Porosität ausgebildet sein. Der poröse Körper kann auch in den Durchgang eingesetzt eine gleichmäßige, d.h. konstante, Porosität über den gesamten porösen Körper aufweisen. Die Porosität des losen porösen Körpers kann gleichmäßig oder ungleichmäßig über den gesamten porösen Körper sein.

In einer bevorzugten Ausführungsform kommt die Druckentlastungsvorrichtung mit dem Aufnahmekörper und dem porösen Körper ohne axialen Sitz, Anschläge oder andere axiale Haltemittel für den porösen Körper aus. Der Halt des porösen Körpers in dem Durchgang wird bei einem Ausführungsbeispiel allein durch die radiale Verformung bzw. die Verformung quer zur Gegenfläche erreicht.

Es kann bei einem anderen Ausführungsbeispiel jedoch auch zumindest ein axialer Anschlag benachbart zu wenigstens einer der beiden Durchgangsflächen des porösen Körpers im Durchgang angeordnet sein und von der den Durchgang begrenzenden Wand quer nach innen wegragen. Der wenigstens eine axiale Anschlag kann zur Vorgabe einer definierten Position des porösen Körpers in dem Durchgang dienen und somit eine Positionierhilfe beim Einsetzen des porösen Körpers in den Durchgang darstellen. Der wenigstens eine axiale Anschlag kann außerdem als Sicherungsmittel zur axialen Sicherung der Position des porösen Körpers im Durchgang eingerichtet sein. Der poröse Körper kann auch gegen den wenigstens einen axialen Anschlag vorgespannt sein. In einer bevorzugten Ausführungsform ist jedoch kein Vorspannen gegen einen axialen Vorschlag vorgesehen.

Vorzugsweise ist über den gesamten Querschnitt und insbesondere auch in einem Randbereich der Durchgangsfläche ein Gasaustausch möglich. Ein zur Sicherung des porösen Körpers gegen ein Herausdrücken aus dem Durchgang dienender Anschlag kann auch axial mit Abstand zu dem porösen Körper angeordnet sein, so dass zwischen dem Anschlag und dem porösen Körper ein Spalt verbleibt, wodurch die gesamte Durchtrittsfläche des porösen Körpers für den Gasaustausch zur Verfügung steht.

In einer bevorzugten Ausführungsform weist der poröse Körper bei bzw. an der Gegenfläche einen Randbereich mit einer Porengröße und/oder Porosität auf, die gegenüber der Porengröße und/oder Porosität des übrigen porösen Körpers reduziert ist. Bei einem Ausführungsbeispiel ragt der Randbereich quer zur Umfangsrichtung, beispielsweise radial nach innen, des porösen Körpers nicht über den wenigstens einen axialen Anschlag hinaus ragt. Der freie Strömungsquerschnitt im Durchgang kann durch den wenigstens einen axialen Anschlag eingeschränkt werden, insbesondere wenn der wenigstens eine Anschlag als ringförmiger Absatz oder als Ringschulter ausgeführt ist. Bei diesem Ausführungsbeispiel ist sichergestellt, dass der Randbereich mit verringerter Porengröße und/oder Porosität nicht über den axialen Anschlag in den freien Strömungsquerschnitt des Durchgangs hineinragt. Somit ist zumindest der Gasvolumenstrom durch den Durchgang und den porösen Körper sichergestellt, der durch den freien Strömungsquerschnitt und die Porengröße und/oder Porosität des Körpers außerhalb des Randbereichs bestimmt ist.

Der poröse Körper kann bei einem Ausführungsbeispiel auch gasundurchlässige Abschnitte enthalten. Beispielsweise kann der poröse Körper an einer äußeren Umfangsfläche des porösen Materials eine Manschette aufweisen, die z.B. aus weichem Metall bestehen kann. Der poröse Körper mit dem porösen Material und der Manschette wird teilweise elastisch und teilweise plastisch verformt und in den Durchgang unter Bildung eines Presssitzes eingesetzt. Die Manschette schmiegt sich zündspaltfrei an die Gegenfläche des Durchgangs an. Vorzugsweise besteht der poröse Körper jedoch vollständig aus einem einheitlichen Material.

Weitere vorteilhafte Merkmale und Ausführungsformen der Erfindung sind Gegenstand von abhängigen Patentansprüchen, sowie der Beschreibung oder der Zeichnung sowie. Nachfolgend werden bevorzugte Ausführungsformen der Erfindung anhand der beigefügten Zeichnung im Einzelnen erläutert. Es zeigen:
Figur 1 eine schematische Darstellung eines Schutzgehäuses zur druckfesten Kapselung von Betriebsmitteln mit einem Ausführungsbeispiel einer Druckentlastungsvorrichtung,
Figur 2a eine schematische Darstellung einer Druckentlastungsvorrichtung in einem Schnittbild gemäß einer Ausführungsform,
Figur 2b eine schematische Darstellung eines Ausführungsbeispiels eines porösen Körpers aus gesintertem Material für eine Druckentlastungsvorrichtung,
Figur 3a eine schematische Darstellung eines unbeanspruchten Ausführungsbeispiels einer Druckentlastungsvorrichtung in einem Schnittbild gemäß einer weiteren Ausführungsform,
Figur 3b eine schematische Darstellung einer Druckentlastungsvorrichtung gemäß einer weiteren unbeanspruchten Ausführungsform in einer Draufsicht,
Figur 4a eine schematische perspektivische Schnittdarstellung einer Ausführungsform einer Druckentlastungsvorrichtung mit einem Aufnahmekörper und einem porösen Körper und
Figur 4b einen Prinzipskizze eines Querschnitts durch die Wand des Durchgangs eines Ausführungsbeispiels eines Aufnahmekörpers für eine Druckentlastungsvorrichtung.

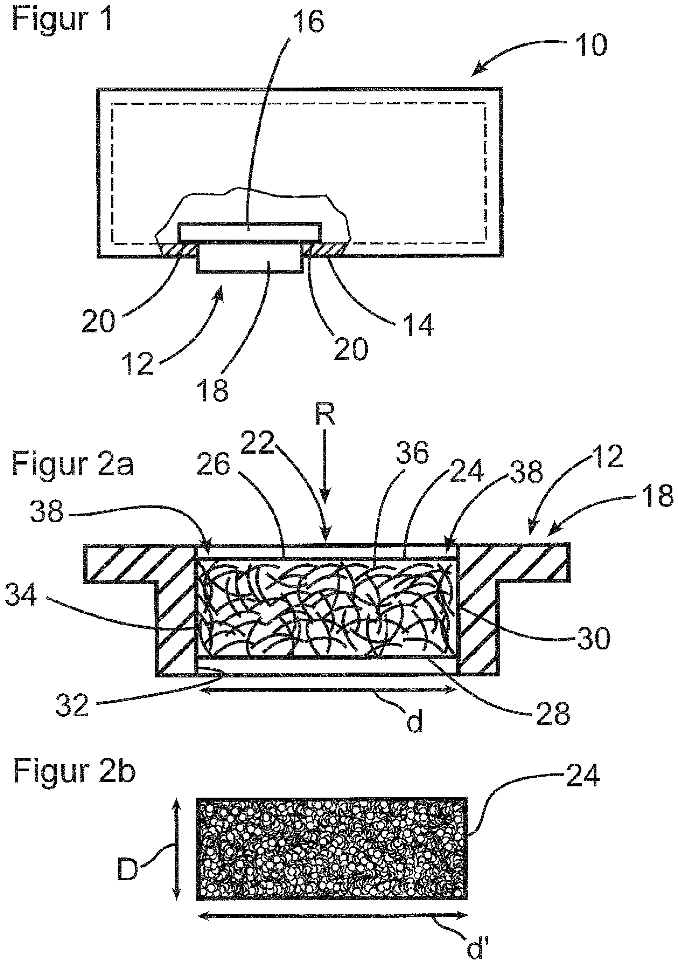

Figur 1 zeigt ein explosionsgeschütztes Schutzgehäuse 10, das beispielsgemäß in der Zündschutzart "druckfeste Kapselung" (Ex-d) ausgeführt ist. Im Schutzgehäuse 10 sind Betriebsmittel von der Umgebung des Schutzgehäuses derart getrennt angeordnet, dass eine explosionsgefährdete Atmosphäre in der Umgebung nicht durch eine von dem Betriebsmittel gebildete Zündquelle gezündet werden kann. Bei den Betriebsmitteln handelt es sich beispielsweise um elektrische und/oder elektronische Betriebsmittel, z.B. Relais.

Das Schutzgehäuse 10 weist eine Druckentlastungsvorrichtung 12 auf, die in einen Wandabschnitt 14 des Schutzgehäuses 10 eingesetzt ist. Das Schutzgehäuse 10 kann auch mehrere Druckentlastungsvorrichtungen 12 aufweisen. Die Druckentlastungsvorrichtung 12 hat einen gasdurchlässigen Durchgang 22, der einen zünddurchschlagsicheren Gasvolumenstrom zwischen dem Inneren des Schutzgehäuses 10 und der Umgebung ermöglicht. Beispielsgemäß weist die Druckentlastungsvorrichtung 12 einen Flansch 16 und einen Aufnahmekörper 18 auf. Der Aufnahmekörper 18 hat eine zylindrische Grundgestalt. Der Durchgang 22 durchsetzt den Aufnahmekörper 18 vollständig. Die Druckentlastungsvorrichtung 12 kann optional am Flansch 16 gegen den Wandabschnitt 14 des Schutzgehäuses 10 mit einer Dichtung 20 abgedichtet. Dadurch kann die Einhaltung der Anforderung an eine IP-Schutzart des Schutzgehäuses 10 sichergestellt werden.

Figur 2 zeigt eine Querschnittsansicht der Druckentlastungsvorrichtung 12 nach Figur 1. In den Durchgang 22 ist ein poröser Körper 24 eingesetzt. Der poröse Körper 24 weist eine innere Durchtrittsfläche 26, eine äußere Durchtrittsfläche 28 und eine äußere Umfangsfläche 30 auf. Die Umfangsfläche 30 verbindet die beiden Durchtrittsflächen 26, 28. Bei den hier beschriebenen Ausführungsbeispielen ist der poröse Körper 24 in Draufsicht auf eine der beiden Durchtrittsflächen 26, 28 gesehen kreisrund. Er kann aber abweichend hiervon auch eine andere Umfangskontur aufweisen.

Die Umfangskontur des porösen Körpers 24 ist beispielsgemäß an die Querschnittskontur zumindest des Abschnitts des Durchgangs 22 mit der Anbringungsstelle angepasst, an der der poröse Körper 24 im Durchgang 22 angeordnet ist. Beispielsgemäß ergibt sich die Umfangskontur des porösen Körpers 24 durch eine zentrische Streckung der Querschnittskontur an der Anbringungsstelle mit einem positiven Streckungsfaktor. Dadurch weist der poröse Körper 24 ein Übermaß gegenüber dem Durchgang 22 an der Anbringungsstelle auf. Beispielsweise handelt es sich bei dem porösen Körper 24 um eine Zylinderscheibe und die Querschnittskontur an der Anbringungsstelle ist kreisrund. Solange ein spaltfreies Anliegen der äußeren Umfangsfläche 30 an der Gegenfläche 34 entlang des gesamten Umfangs des Körpers 24 gewährleistet ist, können sich die Umfangsformen des porösen Körpers 24 und des Durchgangs 22 jedoch auch unterscheiden. Beispielsweise kann der poröse Körper 24 leicht elliptisch sein, währen der Durchgang 22 einen kreisförmigen Querschnitt aufweist.

Der poröse Körper 24 liegt entlang seiner gesamten äußeren Umfangsfläche 30 an einem Abschnitt einer inneren Umfangsfläche 32 des Aufnahmekörpers 18 an. Dieser Abschnitt der inneren Umfangsfläche 32an dem Aufnahmekörper 18 bildet eine Gegenfläche 34 für den porösen Körper 24. Die Anbringungsstelle für den porösen Körper 24 befindet sich somit an der Gegenfläche 34. Auf die wirkt eine mechanische Andrückkraft oder Spannung, hervorgerufen durch eine teilweise elastische Verformung des porösen Körpers 24 quer zu der Gegenfläche 34. Diese Andrückkraft oder Spannung wird dadurch hervorgerufen, dass der von einer äußeren Kraft unbeaufschlagte, nicht in den Durchgang 22 eingesetzte, poröse Körper 24 eine Abmessung d' aufweist, die größer ist als die entsprechende Abmessung d des Durchgangs 22 an der Gegenfläche 34. Der poröse Körper 24 weist also im von einer äußeren Kraft unbeaufschlagten Zustand ein Übermaß an jeder Stelle der äußeren Umfangsfläche 30 in einer Richtung quer zu seiner äußeren Umfangsfläche 30 im Vergleich zur der Abmessung des Durchgangs 22 quer zur Gegenfläche 34 auf. Durch das Übermaß wird eine kraftschlüssige Passung bzw. Verbindung des porösen Körpers 24 in dem Durchgang 22 erreicht. Bei dem in Figur 2a dargestellten Ausführungsbeispiel ist diese kraftschlüssige Verbindung das einzige Mittel zur Verbindung zwischen dem Aufnahmekörper 18 und dem porösen Körper 24. Bei einer Explosion im Inneren des Schutzgehäuses 10 hält bei diesem Ausführungsbeispiel allein die kraftschlüssige Verbindung durch das Übermaß zwischen dem porösen Körper 24 und dem Querschnitt des Durchgangs 22 an der Gegenfläche 34 der Kraft durch die Explosion Stand. Weitere form- oder stoffschlüssige Verbindungen sind in der in Figur 2a dargestellten Ausführungsform nicht vorhanden.

Der poröse Körper 24 ist zündspaltfrei im Durchgang 22 angeordnet. Er drückt sich mit seiner äußeren Umfangsfläche 30 flächig gegen die Gegenfläche 34, wodurch die Bildung von Zündspalten verhindert ist. Der poröse Körper 24 hat eine Porosität und/oder Porengröße, die ein ausreichendes Abkühlen heißer Gase beim Durchtritt durch den porösen Körper 24 und einer Löschung potentieller Zündfunken gewährleistet.

Der in Figur 2a dargestellte poröse Körper 24 ist ein Wirrfaserverbundteil. Er besteht aus einzelnen beispielsgemäß metallischen Fasern 36, die in dem porösen Körper 24 unregelmäßig und miteinander verschlungen angeordnet sind. Die einzelnen Fasern 36 können beispielsweise auch durch einen Sinterprozess miteinander verbunden sein. Durch die Wirrfaserstruktur, in der sich einzelne Fasern 36 gegeneinander abstützen, besitzt der poröse Körper 24 eine gewisse Elastizität und lässt sich dadurch quer zur äußeren Umfangsfläche 30 bis auf Abmessungen kleiner oder gleich den Abmessungen des Durchgangs 22 an der Gegenfläche 34, beispielsweise den Durchmesser d, teilweise elastisch verformen.

Die Porosität P des porösen Körpers 24 beträgt beim Ausführungsbeispiel nach Figur 2a mindestens 60 % bis maximal 80 %. Der maximale Porendurchmesser kann mindestens 80 Mikrometer bis maximal 250 Mikrometer betragen. Die Fasern 36 haben beispielsgemäß einen Faserdurchmesser von mindestens 70 Mikrometern und maximal 130 Mikrometern.

In Figur 2b ist ein von äußeren Kräften unbeaufschlagter poröser Körper 24 dargestellt, der einen Ausgangsdurchmesser d' aufweist, wobei der Betrag dieses Ausgangsdurchmessers d' größer ist als der Durchmesser d des Durchgangs 22 an der Gegenfläche 34. Der poröse Körper 24 weist also ein Übermaß, bezogen auf die Gegenfläche 34 des Durchgangs 22 auf.

Der poröse Körper 24 besteht bei dieser Ausführungsform nach Figur 2b aus gesintertem metallischem Material, insbesondere Pulver, und weist beispielsweise eine Porosität P von mindestens 45 % und maximal 65% auf. Er hat beispielsgemäß eine Porengröße in zumindest einer oder zwei Raumrichtungen parallel zu der Ebene, in der sich die Durchtrittsflächen 26, 38 erstrecken, von mindestens 50 Mikrometern bis maximal 100 Mikrometern.

Unabhängig von der Ausführungsform ist das Material des porösen Körpers 24 vorzugsweise temperaturfest für Temperaturen bis mindestens 400°C.

Unabhängig von der Ausführungsform kann, wie in Figur 2a dargestellt ist, die Porosität in einem äußeren Randbereich 38 des porösen Körpers 24 angrenzend an die Umfangsfläche 30 kleiner sein als in dem übrigen porösen Körper 24. Im Falle des Wirrfaserkörpers 24 der Figur 2a sind die Fasern 36 beispielsweise etwas dichter gedrängt. Dennoch ist vorzugsweise über die gesamte Abmessung bzw. über den gesamten Querschnitt des Durchgangs 22 ein Gasaustausch möglich, in dem auch im Randbereich 38 eine Porosität größer Null vorherrscht. Die resultierende Wegstrecke für ein durch den porösen Körper 24 strömendes Gas durch das Labyrinth der Poren des porösen Körpers 24 ist im Randbereich 38 mindestens genauso lang wie im radial weiter innen liegenden Bereich des porösen Körpers 24, so dass die Zünddurchschlagsicherheit der Druckentlastungsvorrichtung 12 des Schutzgehäuses 10 gewährleistet bleibt. Die resultierende Wegstrecke für ein durch den porösen Körper 24 strömendes Gas wird auch durch die Dicke D des porösen Körpers 24 bestimmt, die bspw. mindestens 5 mm bis 10 mm beträgt.

Die Gegenfläche 34 des Aufnahmekörpers 18 ist vorzugsweise glatt, d.h. sie weist eine Rautiefe auf, die kleiner als die maximale Porenquerabmessung, z.B. der Porendurchmesser, ist. Sie kann jedoch auch regelmäßige und unregelmäßige Strukturen, beispielsweise Rillen aufweisen, die ein Ineinandergreifen bzw. Verhaken des Materials an der Umfangsfläche 30 des porösen Körpers 24 mit der Gegenfläche 34 bewirken.

Die innere Umfangsfläche 32 des Aufnahmekörpers 18 weist in der Figur 2a eine zylindrische Grundform mit einem kreisförmigen Querschnitt auf. Sie kann jedoch auch einen anders geformten Querschnitt, beispielsweise mit einem polygonalen, quadratischen oder rechteckigen oder auf sonstige Weise gekrümmten Umfang aufweisen. Die innere Umfangsfläche 32 des Aufnahmekörpers 18 kann auch in Abschnitten oder insgesamt konisch in oder entgegen der Durchgangsrichtung R zulaufen. Beispielsweise kann sich die Gegenfläche 34 konisch in Durchgangsrichtung R von dem Inneren des Schutzgehäuses 10 zur Umgebung des Schutzgehäuses 10 verjüngen. Auch die äußere Umfangsfläche 30 des eingesetzten porösen Körpers 24 verjüngt sich damit in Durchgangsrichtung R. Dadurch wird eine zusätzlich formschlüssige Verbindungskomponente erreicht, die bei einem Druckanstieg im Inneren des Schutzgehäuses 10 zu einer zusätzlichen mechanischen Stabilität der Druckentlastungsvorrichtung 12 führen kann.

Ein konisches Zulaufen wenigstens eines Abschnitts der inneren Umfangsfläche 32 im Anschluss an die Gegenfläche 34 kann auch als Hilfsmittel dienen, um das Einsetzen des porösen Körpers 24 in den Durchgang 22 zu erleichtern.

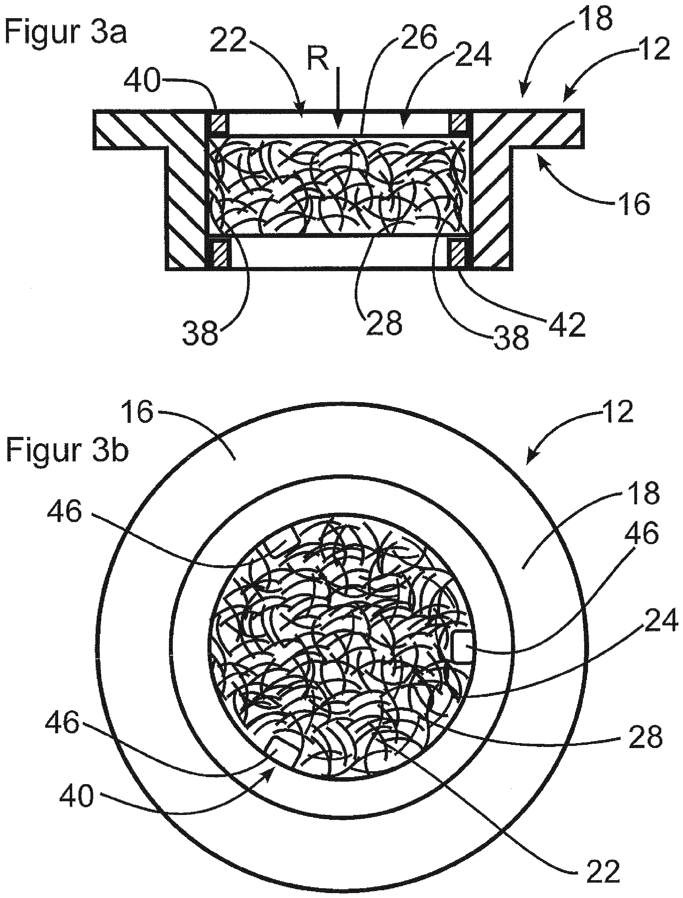

Figur 3a zeigt ein weiteres unbeanspruchten Ausführungsbeispiel einer Druckentlastungsvorrichtung 12 mit einem in einen Durchgang 22 eingesetzten porösen Körper 24. Im Unterschied zu dem Ausführungsbeispiel aus Figur 2a ist hier in dem Durchgang 22 des Aufnahmekörpers 18 auf zumindest einer Seite des porösen Körpers 24 und beispielsgemäß auf der Seite der inneren Durchtrittsfläche 26 ein ringförmiger Anschlag 40 vorhanden. Der Anschlag 40 bildet eine Ringstufe und verringert den Durchmesser bzw. Querschnitt des Durchgangs 22 gegenüber der Gegenfläche 34. Der Anschlag 40 kann integraler Bestandteil des Aufnahmekörpers 18 sein und aus demselben Material naht- und fügestellenfrei mit dem Aufnahmekörper 18 verbunden sein. Alternativ dazu kann der Anschlag 40 beispielsweise auch stoffschlüssig mit dem Aufnahmekörper 18 verbunden sein.

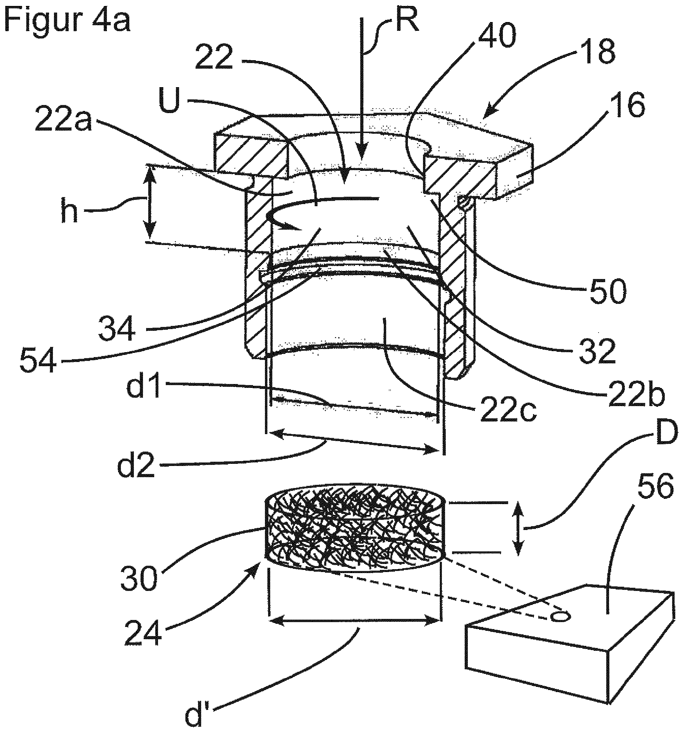

Der Anschlag 40 kann auch durch einen Fortsatz des Flansches 16 gebildet sein, der einen Randabschnitt 50 des Durchgangs 22 überdeckt und dadurch in den Durchgang 22 hineinragt (Figur 4a).

Auf der dem Anschlag 40 entgegengesetzten Seite der äußeren Durchtrittsfläche 28 kann - wie in Figur 3a veranschaulicht - in dem Durchgang 22 eine Ringmutter 42 in ein Innengewinde in dem Durchgang 22 eingeschraubt sein. Der poröse Körper 24 kann mithilfe der Ringmutter 42 gegen den Anschlagring 40 gespannt oder ohne axiale Krafteinwirkung lediglich gegen ein Verschieben im Durchgang 22 gesichert werden. Die Ringmutter stellt daher entweder ein Klemmmittel zur axialen Beaufschlagung des porösen Körpers 24 oder ein Sicherungsmittel dar. Eine solche Ringmutter 42 könnte auch anstelle des unbeweglich befestigten Anschlags 40 auf beiden Seiten des porösen Körpers 24 vorhanden sein.

In und/oder entgegen der Durchgangsrichtung R ist somit durch die beschriebenen Ausführungsvarianten auch eine zusätzliche formschlüssige Sicherung oder Klemmung zwischen dem porösen Körper 24 und dem Aufnahmekörper 18 geschaffen.

Der Anschlagring 40 bzw. die Ringmutter 42 verdecken jeweils einen randseitigen Abschnitt der zugeordneten Durchtrittsfläche 26, 28. Im Randbereich 38 des porösen Körpers ist die Porosität und/oder Porengröße wie bereits geschildert im Vergleich zum übrigen porösen Körper durch die teilweise elastische Verformung des porösen Körpers etwas geringer. Der Anschlagring 40 und/oder die Ringmutter 42 ragen rechtwinkelig zur Umfangsfläche 30 betrachtet nicht über den Randbereich 38 hinaus. Dadurch wird die Gasströmung durch den porösen Körper 24 außerhalb des Randbereichs 38 nicht durch den Anschlag 40 und/oder die Ringmutter 42 behindert.

Das unbeanspruchte Ausführungsbeispiel gemäß Figur 3b zeigt eine Druckentlastungsvorrichtung 12 mit einem Aufnahmekörper 18 und einem eingesetzten porösen Körper 24, wobei vor der äußeren Durchtrittsfläche 28 des porösen Körpers 24 ein Anschlag 40 aus zumindest drei in Umfangsrichtung voneinander beabstandeten Vorsprüngen 46 gebildet ist. Diese Vorsprünge 46 sorgen für eine zusätzliche mechanische Sicherung ohne den Querschnitt des Durchgangs 22 merklich einzuschränken. Die Gasströmung durch den porösen Körper 24 ist dabei auch im Randbereich 38 überwiegend gewährleistet und lediglich an den Stellen, an denen sich die Vorsprünge 46 befinden, geringfügig eingeschränkt.

Figur 4a zeigt im Querschnitt eine weitere Ausführungsform der Druckentlastungsvorrichtung 12. Anhand der Figur 4a wird auch ein Ausführungsbeispiel für Verfahren zur Herstellung der Druckentlastungsvorrichtung 12 beschrieben.

Wie erläutert bildet der am Aufnahmekörper 18 vorhandene Flansch 16, den Anschlag 40 für den einzusetzenden porösen Körper 24. Die Durchgangsbohrung 22 weist in einem zylindrischen ersten Abschnitt 22a im Anschluss an den Anschlag 40 einen ersten Durchmesser d1 auf. Der erste Abschnitt 22a hat eine axiale Erstreckung h in Durchgangsrichtung R. Die innere Umfangsfläche 32 bildet in dem Bereich des ersten Abschnitts 22a eine in Umfangsrichtung U ringförmig geschlossene Gegenfläche 34 für den porösen Körper 24. An den ersten Abschnitt 22a schließt sich ein sich konisch erweiternder zweiter Abschnitt 22b an. Benachbart dazu ist auf der Seite mit dem größeren Durchmesser des zweiten Abschnitts 22b in die Wand des Durchgangs 22 eine ringförmige Nut 54 eingelassen. Der sich an die Nut 54 anschließende dritte Abschnitt 22c des Durchgangs 22 weist einen zweiten Durchmesser d2 auf. Der Aufnahmekörper 18 legt eine Durchgangsrichtung R fest.

Der poröse Körper 24 kann aus einem flachen Ausgangsmaterialteil 56 aus Wirrfasermaterial herausgetrennt wurde. Mögliche Trennverfahren zum Heraustrennen eines porösen Körpers sind beispielsweise Laser-, Plasma- oder Wasserstrahlschneiden oder Stanzen. Bei manchen Trennverfahren kann es zu einer Strukturveränderung beispielsweise einer Aufschmelzung, insbesondere in einer Randzone des porösen Körpers 24, beispielsweise auf der äußeren Umfangsfläche 30, kommen. Beispielsweise können Fasern miteinander verschmelzen oder stoffschlüssige Verbindungsstellen ausbilden. Der unverformte poröse Körper 24 weist einen Ausgangsdurchmesser d' auf, der größer ist als der erste Durchmesser d1 des Durchgangs 22. Der lose poröse Körper 24 weist demgemäß ein Übermaß gegenüber der Gegenfläche 34 des Durchgangs 22 auf. Das Übermaß bezieht sich auf eine Abmessung des Durchgangs 22 quer zu einer Durchgangsrichtung R des Aufnahmekörpers 18. Der zweite Durchmesser d2 des dritten Abschnitts 22c ist vorzugsweise mindestens so groß wie der Ausgangsdurchmesser d' des porösen Körpers 24.

Bei einem Ausführungsbeispiel weist der lose poröse Körper P beispielsweise einen Ausgangsdurchmesser d'= 24,8 mm auf, während der erste Durchmesser d1=24,5 mm beträgt.

Bei der Montage der Druckentlastungsvorrichtung 12 wird der poröse Körper 24 zunächst in den dritten Abschnitt 22c des Durchgangs 22 mit dem Durchmesser d2 eingesetzt. Der poröse Körper 24 wird daraufhin weiter in den zweiten Abschnitt 22b eingeschoben, wodurch er zusammengedrückt wird und sich verformt. Die Konizität dieses zweiten Abschnitts 22b dient als Hilfsmittel zum Verformen des porösen Körpers 24. Über diesen zweiten Abschnitt 22b wird der poröse Körper 24 weiter bewegt, bis er schließlich an der Gegenfläche mit dem ersten Durchmesser d1 im ersten Abschnitt 22a anliegt und dort kraftschlüssig gehalten wird. Der poröse Körper 24 wird beispielsgemäß bis zu dem Anschlag 40 geschoben.

Die Dicke D des porösen Körpers 24 kann der axialen Erstreckung h des ersten Abschnitts 22a und mithin der Gegenfläche 34 entsprechen oder auch kleiner sein. In die Nut 54 kann ein Sicherungsmittel - alternativ zu der Sicherungsmutter 42 - eingesetzt werden, beispielsweise ein Sprengring. Durch ein solches Sicherungsmittel kann ein Herausrutschen des porösen Körpers aus dem Durchgang 22 in und entgegen der Durchgangsrichtung R vermieden werden. Es kann optional auch eine stoffschlüssige Verbindung zur Sicherung, beispielsweise durch Kleben, verwendet werden.

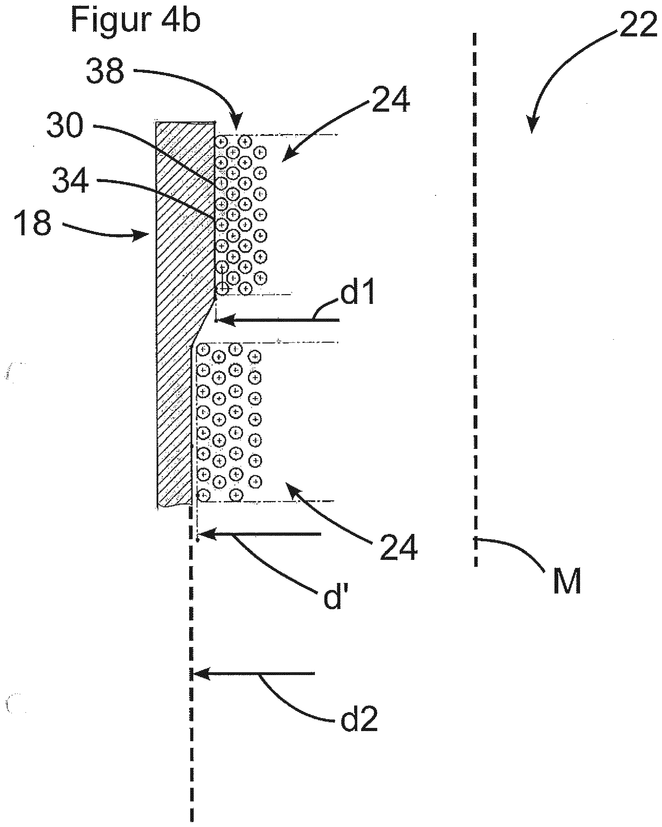

Figur 4b ist eine Prinzipdarstellung zur Veranschaulichung der Verformung des porösen Körpers 24 beim Einsetzen in den Durchgang 22. Durch die Übermaßpassung ist die Porosität P und/oder die Porengröße lokal in einem Randbereich 38 des porösen Körpers 24 in eingesetztem, teilweise elastisch verformten Zustand durch dichter gedrängtes poröses Material geringer als in den übrigen Bereichen des porösen Körpers 24. Die Porosität P und/oder die Porengröße nimmt in dem Randbereich 38 rechtwinkelig von der äußeren Umfangsfläche 30 weg nach innen zur Mitte M des porösen Körpers 24 zu. Außerhalb des Randbereichs 38 ist die Porosität P und/oder die Porengröße im Wesentlichen gleichmäßig.

Bei dem in Figur 4a dargestellten porösen Körper 24 handelt es sich um eine Zylinderscheibe. Die Gestalt des Körpers 24 ist damit an die zylindrische Durchgangsbohrung angepasst. Der poröse Körper 24 kann jedoch, wie beschrieben, auch eine von der Umfangsform des Durchgangs 22 abweichende Umfangsform aufweisen. Durch die radiale Pressverbindung durch die teilweise elastische Verformung quer zur Gegenfläche 34 führen darüber hinaus auch relativ grobe Toleranzen in der Fertigung des Durchgangs 22 und des porösen Körpers 24 zu einer sicheren Verbindung des porösen Körpers 24 in dem Durchgang 22.

Eine spaltfreie Dichtung des Aufnahmekörpers 18 gegen die Wand eines Schutzgehäuses kann beispielsweise durch einen in die bei dem Flansch 16 umlaufende Dichtungsnut 58 eingelegten flachen Dichtungsring erreicht werden.

Alternativ zu den dargestellten Ausführungsformen kann als Aufnahmeteil auch unmittelbar der Wandabschnitt 14 des Schutzgehäuses 10 dienen. Der Durchgang 22 kann dabei als Loch unmittelbar in dem Wandabschnitt 14 vorhanden sein. Der poröse Körper 24 sitzt unmittelbar im Durchgang 22 in dem Wandabschnitt 14 und wird auch mittels der Übermaßpassung gehalten. Die oben beschriebenen verschiedenen Möglichkeiten zur axialen Sicherung des porösen Körpers 24 können auch verwendet werden.

Für die erfindungsgemäße Druckentlastungsvorrichtung 12 wird ein Aufnahmekörper 18 bereitgestellt, der dazu eingerichtet ist, einen porösen Körper 24 in einem Durchgang 22 des Aufnahmekörpers 18 aufzunehmen. Ein bereitgestellter poröser Körper 24 wird in dem Durchgang 22 angeordnet. Der poröse Körper 24 ist in dem Durchgang 22 teilweise elastisch durch eine Übermaßpassung verformt. Der poröse Körper 24 stützt sich dadurch gegen eine Gegenfläche 34 des Aufnahmekörpers 18 entlang seines Umfangs ab und wird dadurch sicher in dem Durchgang 22 gehalten. Die Anordnung ist durch das formschlüssige Anliegen des porösen Körpers 24 entlang seines Umfangs an der Gegenfläche 34 abgeschlossen im Sinne der Zündschutzart druckfeste Kapselung.

### Bezugszeichenliste:

- 10: Schutzgehäuse
- 12: Druckentlastungsvorrichtung
- 14: Wandabschnitt
- 16: Flansch
- 18: Aufnahmekörper
- 20: Dichtung
- 22: Durchgang
- 22a: erster Abschnitt des Durchgangs
- 22b: zweiter Abschnitt des Durchgangs
- 22c: dritter Abschnitt des Durchgangs
- 24: poröser Körper
- 26: innere Durchtrittsfläche
- 28: äußere Durchtrittsfläche
- 30: äußere Umfangsfläche
- 32: innere Umfangsfläche
- 34: Gegenfläche
- 36: Faser
- 38: Randbereich
- 40: Anschlag
- 42: Spannmutter

- 46: Vorsprung
- 48: Anschlagring
- 50: Randabschnitt

- 54: Nut
- 56: Vorratskörper aus Wirrfasermaterial
- 58: Dichtungsnut
- d: Durchmesser des Durchgangs
- R: Durchgangsrichtung
- U: Umfangsrichtung
- d': Ausgangsdurchmesser
- D: Dicke des porösen Körpers
- M: Mitte des porösen Körpers
- P: Porösität

## Patentansprüche

1. Druckentlastungsvorrichtung (12) für ein Schutzgehäuse (10) zur druckfesten Kapselung von Betriebsmitteln, die Zündquellen bilden können,
mit einem Aufnahmekörper (18), der einen Durchgang (22) und eine Gegenfläche (34) aufweist, die in einer Umfangsrichtung (U) ringförmig geschlossen verläuft,
mit einem porösen Körper (24), der in dem Durchgang (22) angeordnet ist,
**dadurch gekennzeichnet, dass** der poröse Körper (24) in dem Durchgang (22) durch eine Übermaßpassung des porösen Körpers (24) in dem Durchgang (22) an der Gegenfläche (34) kraftschlüssig anliegt, so dass der poröse Körper (24) durch die kraftschlüssige Anlage in dem Durchgang (22) explosionssicher gehalten ist.

2. Druckentlastungsvorrichtung (12) nach Anspruch 1,
**dadurch gekennzeichnet, dass** der Aufnahmekörper (18) eine Wand oder ein Wandabschnitt (14) des Schutzgehäuses (10) ist.

3. Druckentlastungsvorrichtung (12) nach einem der vorherigen Ansprüche, **dadurch gekennzeichnet, dass** die Gegenfläche (34) glatt ist.

4. Druckentlastungsvorrichtung (12) nach einem der vorherigen Ansprüche, **dadurch gekennzeichnet, dass** die Gegenfläche (34) konisch ist.

5. Druckentlastungsvorrichtung (12) nach einem der vorherigen Ansprüche, **dadurch gekennzeichnet, dass** der poröse Körper (24) ein Wirrfaserverbundteil ist.

6. Druckentlastungsvorrichtung (12) nach Anspruch 5, wobei der Faserdurchmesser mindestens 70 Mikrometer und maximal 130 Mikrometer beträgt.

7. Druckentlastungsvorrichtung (12) nach einem der Ansprüche 5 oder 6, **dadurch gekennzeichnet, dass** die Porosität (P) des porösen Körpers (24) mindestens 60 Prozent bis maximal 80 Prozent beträgt und/oder der maximale Porendurchmesser mindestens 80 bis maximal 250 Mikrometer beträgt.

8. Druckentlastungsvorrichtung (12) nach einem der Ansprüche 1 bis 4, **dadurch gekennzeichnet, dass** der poröse Körper (24) aus gesintertem Pulvermaterial hergestellt ist.

9. Druckentlastungsvorrichtung (12) nach Anspruch 8, **dadurch gekennzeichnet, dass** die Porosität (P) des eingesetzten porösen Körpers (24) mindestens 45 Prozent bis maximal 60 Prozent und/oder der maximale Porendurchmesser mindestens 50 bis maximal 100 Mikrometer beträgt.

10. Druckentlastungsvorrichtung (12) nach einem der vorherigen Ansprüche, **dadurch gekennzeichnet, dass** die Dicke (D) des porösen Körpers (24) mindestens 5 mm in Durchgangsrichtung (R) beträgt.

11. Druckentlastungsvorrichtung (12) nach einem der vorherigen Ansprüche, **dadurch gekennzeichnet, dass** der poröse Körper (24) aus temperaturfestem Werkstoff besteht.

12. Druckentlastungsvorrichtung (12) nach einem der vorherigen Ansprüche, **dadurch gekennzeichnet, dass** der poröse Körper (24) eine Porosität (P) aufweist, die radial nach außen abnimmt.

13. Druckentlastungsvorrichtung (12) nach einem der vorherigen Ansprüche **dadurch gekennzeichnet, dass** in dem Durchgang (22) ein axialer Anschlag (42, 46, 48) angeordnet ist.

14. Druckentlastungsvorrichtung (12) nach Anspruch 13, **dadurch gekennzeichnet, dass** der poröse Körper (24) eine Randbereich (38) mit geringerer Porosität aufweist und dass der Randbereich (38) quer zur Umfangsrichtung (U) des porösen Körpers (22) nicht über den axialen Anschlag (42, 46, 48) hinausragt.

15. Verfahren zur Herstellung einer Druckentlastungsvorrichtung (12) für ein Schutzgehäuse () zur druckfesten Kapselung von Betriebsmitteln, die Zündquellen bilden können, mit dem Schritt:
- Bereitstellen eines Aufnahmekörpers (18) mit einem Durchgang (22) und einer in einer Umfangsrichtung (U) ringförmig geschlossenen Gegenfläche (34),
und **gekennzeichnet durch** die Schritte:
- Bereitstellen eines porösen Körpers (24) mit einer äußeren Umfangsfläche (30), wobei der poröse Körper (24) ein Übermaß quer zu einer äußeren Umfangsfläche (30) des porösen Körpers (24) in Bezug auf den Durchgang (22) des Aufnahmekörpers (18) aufweist,
- teilweise elastisches Verformen des porösen Körpers (24) zur Reduzierung der Abmessung des porösen Körpers (24) quer zu der äußeren Umfangsfläche (30),
Anordnen des porösen Körpers (24) in dem Durchgang (22) so, dass die äußere Umfangsfläche (30) spaltfrei entlang der Gegenfläche (34) an der Gegenfläche (34) anliegt, so dass der poröse Körper (24) durch die kraftschlüssige Anlage in dem Durchgang (22) explosionssicher gehalten ist.

## Claims

1. Pressure release device (12) for a protective housing (10) for pressure-resistant encapsulation of operating media which may form ignition sources,
with a receiving body (18) having a passage (22) and a counter-face (34) which runs as a closed ring in the circumferential direction (U),
with a porous body (24) arranged in the passage (22),
**characterised in that** the porous body (24) in the passage (22) bears by force fit on the counter-face (34) due to an oversize fit of the porous body (24) in the passage (22), so that the porous body (24) is held in explosion-proof fashion in the passage (22) by the force-fit contact.

2. Pressure release device (12) according to claim 1, **characterised in that** the receiving body (18) is a wall or a wall portion (14) of the protective housing (10).

3. Pressure release device (12) according to any of the preceding claims, **characterised in that** the counter-face (34) is smooth.

4. Pressure release device (12) according to any of the preceding claims, **characterised in that** the counter-face (34) is conical.

5. Pressure release device (12) according to any of the preceding claims, **characterised in that** the porous body (34) is a tangled-fibre composite part.

6. Pressure release device (12) according to claim 5, wherein the fibre diameter is at least 70 µm and most 130 µm.

7. Pressure release device (12) according to any of claims 5 or 6, **characterised in that** the porosity (P) of the porous body (24) is at least 60% to at most 80%, and/or the maximum pore diameter is at least 80 to at most 250 µm.

8. Pressure release device (12) according to any of claims 1 to 4, **characterised in that** the porous body (24) is made of a sintered powder material.

9. Pressure release device (12) according to claim 8, **characterised in that** the porosity (P) of the inserted porous body (24) is at least 45% to at most 60%, and/or the maximum pore diameter is at least 50 to at most 100 µm.

10. Pressure release device (12) according to any of the preceding claims, **characterised in that** the thickness (D) of the porous body (24) is at least 5 mm in the passage direction (R).

11. Pressure release device (12) according to any of the preceding claims, **characterised in that** the porous body (24) consists of temperature-resistant material.

12. Pressure release device (12) according to any of the preceding claims, **characterised in that** the porous body (24) has a porosity (P) which diminishes radially towards the outside.

13. Pressure release device (12) according to any of the preceding claims, **characterised in that** an axial stop (42, 46, 48) is arranged in the passage (22).

14. Pressure release device (12) according to claim 13, **characterised in that** the porous body (24) has an edge region (38) with lower porosity, and the edge region (38) does not protrude beyond the axial stop (42, 46, 48) transversely to the circumferential direction (U) of the porous body (22).

15. Method for producing a pressure release device (12) for a protective housing (10) for pressure-resistant encapsulation of operating media which may form ignition sources, with the step:
- provision of a receiving body (18) with a passage (22) and a counter-face (34) which runs as a closed ring in the circumferential direction (U),
and **characterised by** the steps :
- provision of a porous body (24) with an outer circumferential face (30), wherein the porous body (24) is oversized transversely to an outer circumferential face (30) of the porous body (24) relative to the passage (22) of the receiving body (18),
- partial elastic deformation of the porous body (24) so as to reduce the dimension of the porous body (24) transversely to the outer circumferential face (30),
- arrangement of the porous body (24) in the passage (22) such that the outer circumferential face (30) lies on the counter-face (34) without gaps along the counter-face (34), so that the porous body is held in explosion-proof fashion in the passage (22) by the force-fit contact.

## Revendications

1. Dispositif de réduction de pression (12) destiné à un carter de protection (10) en vue de la protection antidéflagrante d'équipements pouvant constituer des sources d'inflammation,
comprenant un corps de réception (18) qui présente une traversée (22) et une surface antagoniste (34) qui est fermée sous une forme annulaire dans la direction périphérique (U),
comprenant un corps poreux (24) qui est disposé dans la traversée (22),
**caractérisé en ce que** le corps poreux (24) est appliqué à force contre la surface antagoniste (34), en étant placé dans la traversée (22) par un montage à force du corps poreux (24) dans la traversée (22), de sorte que le corps poreux (24) est maintenu de façon antidéflagrante dans la traversée (22), en raison de l'application à force.

2. Dispositif de réduction de pression (12) selon la revendication 1, **caractérisé en ce que** le corps de réception (18) est une paroi ou une partie de paroi (14) du carter de protection (10).

3. Dispositif de réduction de pression (12) selon l'une des revendications précédentes, **caractérisé en ce que** la surface antagoniste (34) est lisse.

4. Dispositif de réduction de pression (12) selon l'une des revendications précédentes, **caractérisé en ce que** la surface antagoniste (34) est conique.

5. Dispositif de réduction de pression (12) selon l'une des revendications précédentes, **caractérisé en ce que** le corps poreux (24) est un élément composite à fibres aléatoires.

6. Dispositif de réduction de pression (12) selon la revendication 5, dans lequel le diamètre des fibres est au moins de 70 micromètres et au maximum de 130 micromètres.

7. Dispositif de réduction de pression (12) selon l'une des revendications 5 ou 6, **caractérisé en ce que** la porosité (P) du corps poreux (24) est d'au moins 60 pour cent à au maximum 80 pour cent et/ou le diamètre de pore maximal est d'au moins 80 à au maximum 250 micromètres.

8. Dispositif de réduction de pression (12) selon l'une des revendications 1 à 4, **caractérisé en ce que** le corps poreux (24) est réalisé à partir d'un matériau en poudre fritté.

9. Dispositif de réduction de pression (12) selon la revendication 8, **caractérisé en ce que** la porosité (P) du corps poreux (24) mis en place est d'au moins 45 pour cent à au maximum 60 pour cent et/ou le diamètre de pore maximal est d'au moins 50 à au maximum 100 micromètres.

10. Dispositif de réduction de pression (12) selon l'une des revendications précédentes, **caractérisé en ce que** l'épaisseur (D) du corps poreux (24) est au moins de 5 mm dans le sens de la traversée (R).

11. Dispositif de réduction de pression (12) selon l'une des revendications précédentes, **caractérisé en ce que** le corps poreux (24) est constitué d'un matériau résistant aux températures.

12. Dispositif de réduction de pression (12) selon l'une des revendications précédentes, **caractérisé en ce que** le corps poreux (24) présente une porosité (P) qui diminue radialement vers l'extérieur.

13. Dispositif de réduction de pression (12) selon l'une des revendications précédentes, **caractérisé en ce qu'**une butée axiale (42, 46, 48) est disposée dans la traversée (22).

14. Dispositif de réduction de pression (12) selon la revendication 13, **caractérisé en ce que** le corps poreux (24) présente une zone de bord (38) avec une porosité plus faible, et **en ce que**, perpendiculairement à la direction périphérique (U) du corps poreux (24), la zone de bord (38) ne dépasse pas par rapport à la butée axiale (42, 46, 48).

15. Procédé de fabrication d'un dispositif de réduction de pression (12) destiné à un carter de protection () en vue de la protection antidéflagrante d'équipements pouvant constituer des sources d'inflammation, comprenant l'étape de :
- mise à disposition d'un corps de réception (18) doté d'une traversée (22) et d'une surface antagoniste (34) fermée sous une forme annulaire dans la direction périphérique (U),
et **caractérisé en ce qu'**il comprend les étapes suivantes :
- mise à disposition d'un corps poreux (24) avec une surface périphérique extérieure (30), le corps poreux (24) présentant un surdimensionnement, perpendiculairement à une surface périphérique extérieure (30) du corps poreux (24), par rapport à la traversée (22) du corps de réception (18),
- déformation élastique partielle du corps poreux (24) aux fins de réduire la dimension du corps poreux (24), perpendiculairement à la surface périphérique extérieure (30),
mise en place du corps poreux (24) dans la traversée (22), de manière à ce que la surface périphérique extérieure (30) soit appliquée sans interstice contre la surface antagoniste (34), le long de la surface antagoniste (34), de sorte que le corps poreux (24) est maintenu de façon antidéflagrante dans la traversée (22), du fait de l'application à force.
